# EUROPÄISCHE PATENTSCHRIFT

(11) **EP 3 532 226 B1**
(45) Veröffentlichungstag und Bekanntmachung des Hinweises auf die Patenterteilung: **30.09.2020**
(21) Anmeldenummer: 17745162.2
(22) Anmeldetag: 21.07.2017
(51) Int. Cl.: B23B 51/04, B23B 51/10, B23D 77/00

(54) **ZERSPANUNGSWERKZEUG**
MACHINING TOOL
OUTIL D'USINAGE PAR ENLÈVEMENT DE COPEAUX

(30) Priorität: 27.10.2016 DE 102016120595
(43) Veröffentlichungstag der Anmeldung: 04.09.2019
(73) Patentinhaber: Komet Group GmbH, 74354 Besigheim (DE)
(72) Erfinder: BIERL, Wolfgang, 74363 Güglingen (DE); SCHNEIDER, Rico, 74385 Pleidelsheim (DE); SCHMID, Frank, 73779 Deizisau (DE); EDELMANN, Karl-Heinz, 71139 Ehningen (DE)
(74) Vertreter: Pfiz, Thomas
(86) Internationale Anmeldenummer: PCT/EP2017/068551
(87) Internationale Veröffentlichungsnummer: WO 2018/077495

(56) Entgegenhaltungen:
- EP-A1- 1 475 174
- EP-A1- 2 522 447
- EP-A2- 2 140 960
- WO-A1-2009/071288
- DE-A1-102010 021 212
- DE-B3-102013 108 825
- DE-B3-102016 111 671
- DE-U1-202007 016 817

## Beschreibung

Die Erfindung betrifft ein Zerspanungswerkzeug gemäß dem Oberbegriff des Anspruchs 1 zum Einsatz in Werkzeugmaschinen für rotierende Schneidvorgänge, insbesondere Vollbohrwerkzeug, Aufbohrwerkzeug, Senkwerkzeug oder Reibwerkzeug, mit einem um eine Mittelachse rotierbaren, in deren Richtung langgestreckten Grundkörper, mindestens einem an dem Grundkörper fixierten Schneidelement und mindestens einem längs des Grundkörpers außerhalb der Mittelachse sich erstreckenden, durch einen von der Mittelachse durchsetzen Kern des Grundkörpers nach innen begrenzten Spanabfuhrkanal. Ein solches Zerspanungswerkzeug ist aus der EP 1 475 174 A bekannt.

Bei konventionellen Zerspanungswerkzeugen, z.B. Vollbohrer, Aufbohrer, Senkwerkzeuge und Reibwerkzeuge, sind die Spannuten radial nach außen hin geöffnet. Bedingt durch die Fliehkraft werden die Späne gegen die Bohrungswandung geschleudert und können diese beschädigen und/oder in Aussparungen des Bauteils verbleiben. Weiterhin wird durch die geöffneten Spanräume die Stabilität des Grundkörpers verringert. Grundsätzlich können durch Fräsbearbeitung keine geschlossenen Spanräume, welche zudem verdrallt sind, hergestellt werden. Allenfalls können sehr kurze Werkzeuge realisiert werden, jedoch ist deren Kontur abhängig von vorhanden Bearbeitungswerkzeugen. Längere Werkzeuge könnten durch Bohren hergestellt werden, jedoch kann hier keine Verdrallung der Spanräume erreicht werden.

Ausgehend hiervon liegt der Erfindung die Aufgabe zugrunde, die im Stand der Technik bekannten Zerspanungswerkzeuge zur Vermeidung der vorgenannten Nachteile weiter zu verbessern und eine erhöhte Stabilität sowie eine variable Querschnittsgeometrie insbesondere zur gezielten Ausleitung von Spänen und generell zur Erreichung einer hohen Fertigungsqualität zu ermöglichen. Eine weitere Aufgabe besteht darin, ein Zurückfallen von Spänen in die Bohrung zu vermeiden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht davon aus, zumindest einen Axialabschnitt des Spanabfuhrkanals ringsum zu begrenzen. Dementsprechend wird erfindungsgemäß vorgeschlagen, dass der Spanabfuhrkanal zumindest über einen Längsabschnitt ringsum durch eine an den Kern anschließende und zusammen mit diesem einstückig ausgebildete äußere Spanraumwand des Grundkörpers radial nach außen abgeschlossen ist. Durch den im Querschnitt geschlossenen Spanabfuhrkanal wird die Steifigkeit des Grundkörpers erhöht. Zugleich wird vermieden, dass Späne ungezielt aus dem Spanabfuhrkanal austreten und die Fertigungsqualität beeinträchtigen.

Vorteilhafterweise bildet die äußere Spanraumwand einen Teil eines um die Mittelachse geschlossen umlaufenden Außenmantels des Grundkörpers, so dass ein insgesamt homogener Werkzeugkörper erreicht wird.

Erfindungsgemäß ist die äußere Spanraumwand aus einem Pulvermaterial durch ein additives Fertigungsverfahren, insbesondere durch selektives Laserschmelzen gebildet. Dabei ergeben sich aufgrund der additiven Fertigung Freiheiten in der Gestaltung des Spanraums, die durch abtragende Fertigungsverfahren nicht erreichbar sind. Größe und Form des Spanraums lassen sich variabel anpassen, um eine optimierte Spangeometrie und Entspanung zu erzielen. Insbesondere lassen sich unterschiedliche Steigungen der Spanräume sowie veränderbare Steigungen innerhalb des Spanraumes einfach realisieren. Diese Möglichkeiten umfassen Querschnittsveränderungen über die Länge des Werkzeuges, wobei auch relativ lange Werkzeuge machbar sind.

Erfindungsgemäß sind die äußere Spanraumwand und zumindest ein Teil des Kerns als einstückiges Bauteil additiv gebildet . Somit kann ein einheitlicher Schneidabschnitt des Grundkörpers als 3D-Druckteil geschaffen werden.

Zur weiteren funktionellen Anpassung ist es von Vorteil, wenn die äußere Spanraumwand in Umfangsrichtung gesehen eine variierende Wandstärke aufweist.

Für eine optimierte Spanabfuhr ist es möglich, dass der Spanabfuhrkanal längs des Grundkörpers ggf. mit veränderlicher Steigung gewendelt oder gedrallt verläuft.

Eine weitere Verbesserung sieht vor, dass der Spanabfuhrkanal in seinem Verlauf eine veränderliche, vorzugsweise nach hinten sich erweiternde Querschnittsgröße besitzt.

Um die Spanausleitung zu unterstützen und Blockaden zu vermeiden ist es denkbar, dass der Spanabfuhrkanal eine von einer Kreisform abweichende Querschnittsform besitzt.

Im Hinblick auf unterschiedlich angeordnete Schneidelemente kann es auch von Vorteil sein, wenn in dem Grundkörper mehrere Spanabfuhrkanäle mit voneinander unterschiedlichem Verlauf, insbesondere mit voneinander unterschiedlicher Steigung angeordnet sind.

Um den Spaneinlauf nicht zu behindern, ist es vorteilhaft, wenn das Schneidelement im Bereich einer nach außen offenen Spanleitkontur eines zugeordneten Spanabfuhrkanals angeordnet ist.

Günstig ist es auch, wenn der Spanabfuhrkanal einen von der äußeren Spanraumwand freigehaltenen Spanauslauf aufweist.

Erfindungsgemäß ist durch den Kern mindestens ein Kühlmittelkanal hindurchgeführt.

Um die Kühlmittelführung an die Werkzeuggeometrie und insbesondere an den Verlauf der Spanräume anzupassen, verläuft erfindungsgemäß der Kühlmittelkanal zumindest abschnittsweise räumlich gekrümmt .

Zur Optimierung des Kühlschmierstoffeinsatzes und zur Vermeidung von strukturellen Schwächungen beispielsweise im Bereich von Klemmschrauben ist es günstig, wenn der Kühlmittelkanal in einem Endabschnitt auf mehrere Auslassbohrungen verzweigt ist.

Grundsätzlich ist es möglich, dass das Schneidelement durch Löten, Kleben, Klemmen, Schrauben oder Sintern direkt mit dem Grundkörper verbunden ist oder mittelbar über eine Kassette an dem Grundkörper gehalten ist.

Ein besonderer Aspekt der Erfindung liegt darin, dass der Grundkörper eine vorzugsweise in einer Radialebene liegende, in Vorschubrichtung nach vorne weisende vordere Stirnwand aufweist, und dass die Stirnwand einen Querschnittsbereich des mindestens einen Spanabfuhrkanals überdeckt. Dadurch verbleiben keine Restspäne mehr im Werkstück, da ein unerwünschtes Zurückfallen aus dem Spanabfuhrkanal beim Rückzug des Werkzeugs durch die stirnseitige Abdeckelung verhindert wird. Zweckmäßig sollte ein Querschnittsbereich von mehr als 50% des Spanabfuhrkanals überdeckt werden. Generell besteht auch der Vorteil, dass durch die geschlossene Spankanalform die Bohrungswandung vor Spänen geschützt wird und damit die Oberflächenrauheit verringert wird.

Eine weitere Verbesserung in dieser Richtung sieht vor, dass die Stirnwand einen in den Spanabfuhrkanal mündenden Stirnspalt gegenüber dem Schneidelement begrenzt, so dass der erzeugte Span an seiner Wurzel durch den Spalt in den Spanabfuhrkanal fließen muss, als Gesamtgebilde jedoch aus diesem nicht mehr austreten kann.

Die Spaltbreite des Stirnspalts richtet sich nach der Vorschubgeschwindigkeit und der erzeugten Spandicke und sollte vorteilhafterweise im Bereich von 0,2 bis 1,0 mm liegen.

Um eine Kollision des Stirndeckels bzw. der Stirnwand mit dem Werkstückboden zu vermeiden und dennoch einen zuverlässigen Spaneinlauf zu gewährleisten, sollte das Schneidelement eine über die Stirnwand nach vorne überstehende Stirnschneide aufweisen, wobei der Überstand der Stirnschneide vorteilhafterweise im Bereich von 0,1 bis 0,8 mm liegt.

Für die Führung an der Bohrungswand oder deren Bearbeitung ist es vorteilhaft, wenn das Schneidelement eine radial nach außen weisende Radialschneide oder Rundschlifffase aufweist, und wenn zwischen der äußeren Spanraumwand und dem Schneidelement ein Radialspalt freigehalten ist. Der Stirnspalt und der Radialspalt sollten dabei gemeinsam eine winklige Spaltöffnung bilden.

Vorteilhafterweise besitzt die äußere Spanraumwand einen in Werkzeugdrehrichtung dem Schneidelement vorgelagerten, radial nach außen ragenden Wandvorsprung. Damit tritt der erzeugte Span in den Spanabfuhrkanal nach innen ein und wird nicht am Rand entlang außen weitergeführt.

Zur Verbesserung der Spanabfuhr und der Förderleistung ist es von Vorteil, wenn der mindestens eine Kühlmittelkanal in Bogenform zu einer in den Spanabfuhrkanal mündenden, in Spanabfuhrrichtung, d.h. nach hinten ausgerichteten Auslassöffnung geführt ist.

Um die Formgebung des Spans und die Spanförderung zu optimieren, wird der mindestens eine Spanabfuhranal spiralisiert. Entsprechend ist es auch vorteilhaft, wenn der zugeordnete Kühlmittelkanal um die Mittelachse herum spiralisiert verläuft.

Eine Verbesserung des Zerspanungsvorgangs lässt sich auch dadurch erreichen, dass das Schneidelement unter einem Achswinkel schräg bezüglich der Mittelachse angestellt ist.

Um ein Festsetzen an der Bohrungswand zu vermeiden, ist es von Vorteil, wenn der Außenmantel des Grundkörpers nur in einem vorderen Endabschnitt im Durchmesser erweitert und demzufolge nach hinten verjüngt ist.

Damit ein Bohrvorgang ins Volle möglich wird, ist es günstig, wenn mindestens ein Schneidelement eine bis zur Mittelachse radial nach innen reichende Stirnschneide aufweist.

Eine weitere Gestaltungsmöglichkeit für komplexere Bohrungen sieht vor, dass der Grundkörper eine axiale Stufenkontur mit unterschiedlichen Durchmessern aufweist, und dass im Bereich der Stufenkontur mindestens ein Schneidelement angeordnet ist.

Im Folgenden wird die Erfindung anhand der in der Zeichnung schematisch dargestellten Ausführungsbeispiele näher erläutert. Es zeigen:
- Fig. 1: ein Maschinenbohrwerkzeug zum Vollbohren mit radial geschlossenen Spanabfuhrkanälen in Seitenansicht;
- Fig. 2: einen Schnitt in der Linie 2 - 2der Fig. 1;
- Fig. 3: das Maschinenbohrwerkzeug nach Fig. 1 um 90° gedreht in Seitenansicht;
- Fig. 4: eine vordere Stirnansicht des Maschinenbohrwerkzeugs;
- Fig. 5: einen Radialschnitt entlang der Linie 5 - 5 der Fig. 1;
- Fig. 6: ein Bohrwerkzeug mit radial geschlossenen und stirnseitig überdeckten Spanabfuhrkanälen in perspektivischer Darstellung;
- Fig. 7: eine vergrößerte Darstellung des Schneidabschnitts des Bohrwerkzeugs nach Fig. 6;
- Fig. 8: eine Ausschnittsvergrößerung im Bereich eines Schneidelements der Fig. 7;
- Fig. 9: einen Querschnitt des Bohrwerkzeugs nach Fig. 6 im Bereich der Spanabfuhrkanäle; und
- Fig. 10: eine Seitenansicht des Schneidabschnitts des Bohrwerkzeugs nach Fig. 6 mit angedeuteten Kühlmittelkanälen.

Das in der Zeichnung dargestellte Bohrwerkzeug 10 umfasst einen um eine Mittelachse 12 rotierbaren und in deren Richtung langgestreckten Grundkörper 14, zwei am vorderen Stirnende des Grundkörpers 14 im Winkelabstand von 180° und radial versetzt zueinander fixierte Schneidelemente 16, 18, denen jeweils ein durch eine äußere Spanraumwand 22 radial nach außen geschlossener Spanabfuhrkanal 24 in dem Grundkörper 14 nachgeordnet ist.

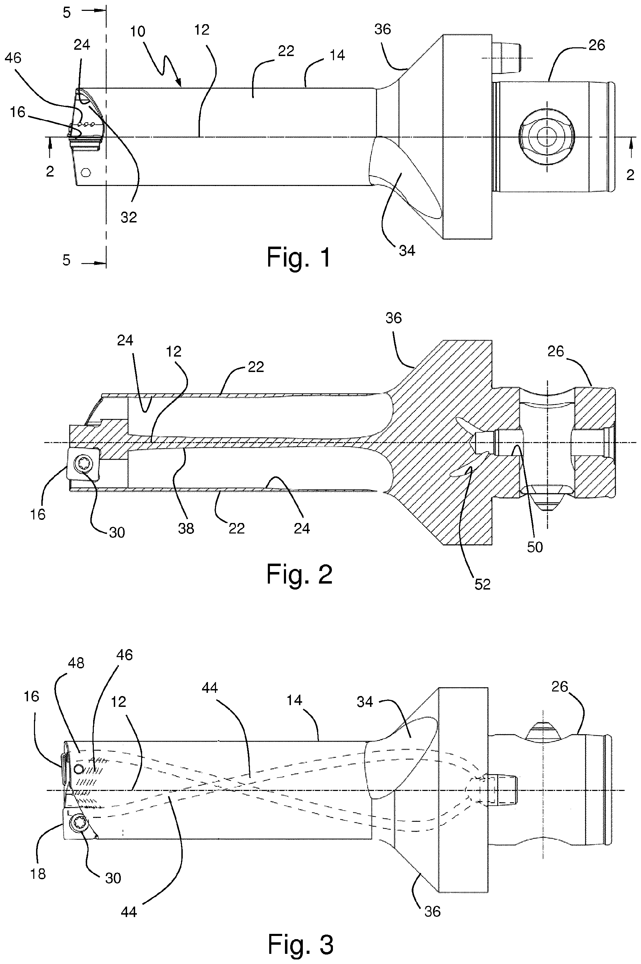

Wie aus Fig. 1 bis 3 ersichtlich, besitzt der Grundkörper 14 an seinem rückseitigen Abschnitt ein zum Einspannen in die Spindel einer Werkzeugmaschine geeignetes Spannteil 26, zum Beispiel eine ABS-Schnittstelle. Damit lässt sich das Bohrwerkzeug 10 um seine Mittelachse 12 rotierend antreiben und zugleich unter Vorschub in Richtung der Mittelachse 12 bewegen.

Der Grundkörper 14 ist zumindest in seinem außen zylindrischen vorderen Schaftteil 28 als Stahlformteil einschließlich der äußeren Spanraumwand 22 additiv bzw. generativ aufgebaut, beispielsweise durch selektives Laserschmelzen. Bei diesem 3D-Formgebungsverfahren wird auf einer Bauplattform eine dünne Schicht eines Pulvermaterials aufgebracht. Sodann wird das Pulvermaterial mittels eines Lasers lokal umgeschmolzen, so dass sich nach dem Erstarren eine feste Materialschicht bildet. Ist das Material erstarrt, wird die Bauplattform entsprechend der Schichtdicke abgesenkt und eine neue Pulverschicht aufgetragen. Auf diese Weise können Werkzeuge oder Formen entfallen, wobei der Formling mit großer Geometriefreiheit herstellbar ist. Das selektive Laserschmelzen (SLM, Selective Laser Melting) ist somit ein additiver Prozess im Gegensatz zu einer konventionellen subtraktiven zerspanenden Fertigung.

Die Schneidelemente 16, 18 besitzen jeweils eine Stirnschneide, die im Wesentlichen senkrecht zur Mittelachse 12 verläuft. In der gezeigten Ausführung sind die Schneidelemente 16, 18 als Wendeschneidplatten mittels einer Befestigungsschraube 30 in jeweiligen Plattensitzen fixiert. Sie können aber auch als PKD-Schneiden auf den Grundkörper 14 aufgelötet sein.

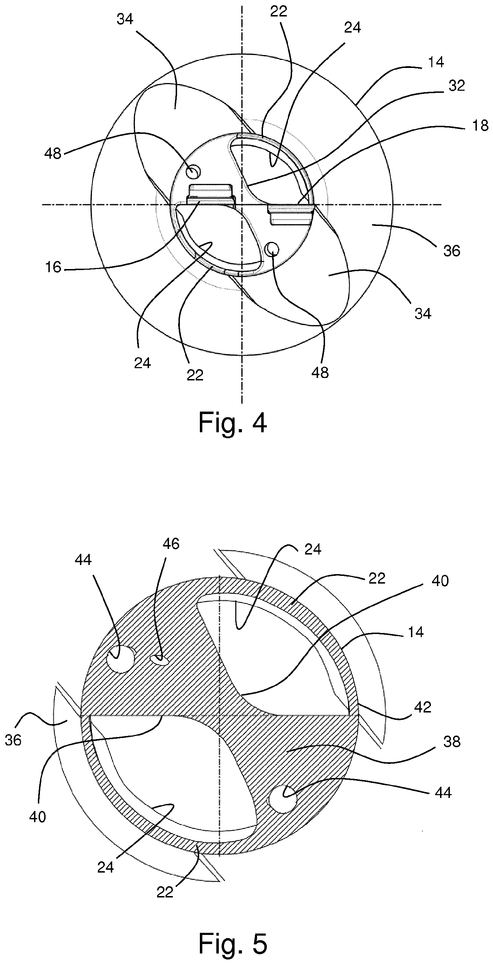

Wie auch aus Fig. 4 ersichtlich, schließt sich an die Schneidelemente 16, 18 eine stirnseitig offene Spanleitkontur 32 an, die die abgetragenen Späne in den jeweiligen Spanabfuhrkanal 24 einleitet. An seinem rückwärtigen Ende weisen die Spanabfuhrkanäle einen von der äußeren Spanraumwand 22 freigehaltenen Spanauslauf 34 auf. Dieser befindet sich in einem nach hinten sich erweiternden Konusabschnitt 36 des Grundkörpers 14.

Wie am besten aus Fig. 5 ersichtlich, besitzt der Grundkörper 14 einen von der Mittelachse 12 durchsetzten stegartigen Kern 38, der sich zu den Spanraumwänden 22 hin radial nach außen erweitert. Der Kern 38 begrenzt somit mit seinen beiden Seitenwänden 40 die Spanabfuhrkanäle 24 nach innen, während die einstückig angeformten äußeren Spanraumwände 22 die Spanabfuhrkanäle 24 radial nach außen abschließen. Dabei wird eine von der Kreisform abweichende, etwa elliptische Querschnittsfläche für die Spanabfuhr freigehalten.

Wie aus Fig. 5 auch ersichtlich, besitzen die äußeren Spanraumwände 22 eine veränderliche Wandstärke bei teilzylindrischer Außenkontur, die sich an die Außenseite des Kerns 38 flächenbündig anschließt, so dass der Grundkörper 14 von einem um die Mittelachse 12 geschlossen umlaufenden Außenmantel 42 umfasst wird. Die Spanabfuhrkanäle 24 sind damit ringsum vollständig geschlossen. Dadurch können die erzeugten Späne nicht in Freiräume des Werkstücks bzw. an Bohrungswände des Bauteils gelangen und werden vollständig zum offenen Spanauslauf 34 geleitet und dort entfernt von dem Werkstück nach außen abtransportiert.

Bei dem gezeigten Ausführungsbeispiel verlaufen die Spanabfuhrkanäle 24 außerhalb der Mittelachse 12 geradlinig durch den Grundkörper 14. Um für einen optimierten Spanfluss zu sorgen, ist es aufgrund der additiven Bauweise auch möglich, dass die Spanabfuhrkanäle 24 ihrer in Größe und/oder Form an eine optimierte Spangeometrie und Entspanung variabel angepasst sind, beispielsweise eine entgegen der Vorschubrichtung nach hinten zunehmende Querschnittsgröße besitzen und ggf. mit veränderlicher Steigung gewendelt sind. Dabei sind auch voneinander unterschiedliche Steigungen der Spanräume sowie veränderbare Steigungen innerhalb des jeweiligen Spanraumes denkbar.

In den Fig. 3 und 5 sind zwei Kühlmittelkanäle 44 gezeigt, die durch eine Wandpartie des Kerns 38 hindurchgeführt sind und dabei zur optimierten Steifigkeit des Werkzeugs angepasst einem räumlich gekrümmten Verlauf folgen. Die Kühlmittelkanäle 44 verzweigen sich zu mehreren Auslassbohrungen 46, 48. Wie aus Fig. 2 ersichtlich, wird das Kühlmittel bzw. der Kühlschmierstoff von der Rückseite des Werkzeugs 10 her über einen zentralen Zuführkanal 50 in dem Grundkörper 12 eingespeist. Von dort verlaufen gekrümmte Abzweigungen 52 zu dem jeweiligen Kühlmittelkanal 44 hin. Eine solche geometrisch komplexe Formgebung der Kühlmittelführung ist praktisch nur durch das additive Fertigungsverfahren möglich.

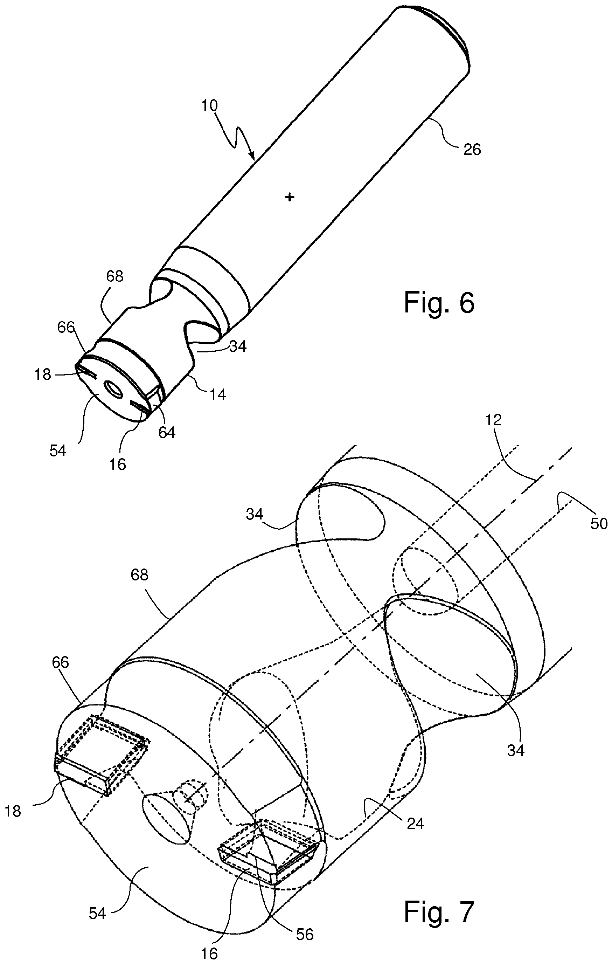

Bei dem in den Figuren 6 bis 10 dargestellten Bohrwerkzeug 10 sind gleiche oder ähnliche Teile mit denselben Bezugszeichen versehen wie vorstehend beschrieben. Hier ist ein Schaftwerkzeug gezeigt, das einen hinteren zylindrischen Schaft als Spannteil 26 und einen vorderen Schneidabschnitt als Grundkörper 14 besitzt, der in Form eines einstückigen 3D-Druckteils additiv aufgebaut ist.

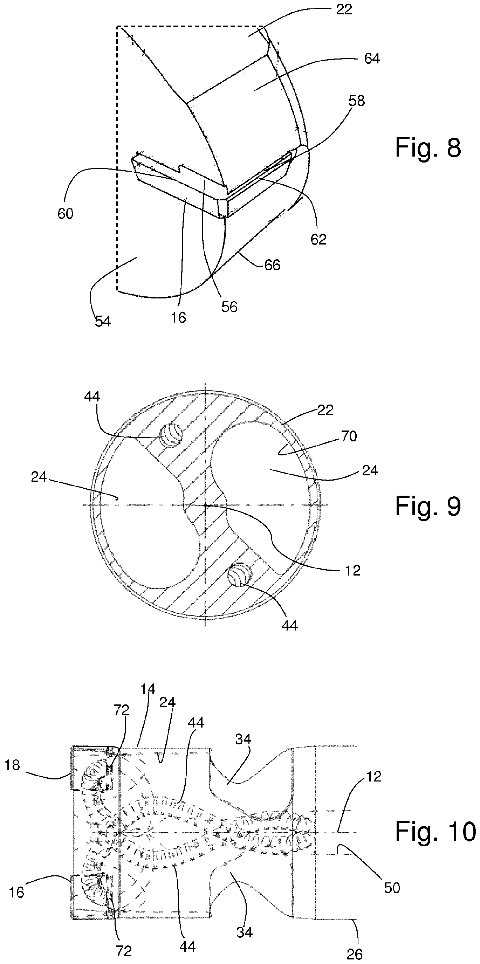

Eine Besonderheit liegt hier darin, dass der Grundkörper 14 eine in Vorschubrichtung weisende vordere Stirnwand 54 besitzt, welche die beiden Spanabfuhrkanäle 24 stirnseitig weitgehend überdeckt und somit ein Zurückfallen der Späne in die erzeugte Bohrung verhindert. Um den Spanfluss in die Spanabfuhrkanäle hinein zu ermöglichen, ist in der Stirnwand 54 ein jeweiliger Stirnspalt 56 gegenüber den Schneidelementen 16, 18 freigehalten. Wie am besten aus Fig. 8 ersichtlich, schließt sich an den Stirnspalt 56 ein Radialspalt 58 in der äußeren Spanraumwand 22 an. Während die Stirnschneide der Schneidelemente 16, 18 um weniger als 1 mm über die Stirnwand 54 übersteht, ist an der radialen Schneidelementkante eine Rundschlifffase 62 vorgesehen, die eine Führung an der Bohrungswandung ermöglicht.

Zweckmäßig ist der Radialspalt 58 durch einen Wandvorsprung 64 begrenzt, der an der Spanraumwand 22 radial übersteht und vermeidet, dass Spanreste vorbeilaufen können. Günstig ist es auch, dass der der vordere Endabschnitt 66 gegenüber einem nach hinten anschließenden Abschnitt 68 im Durchmesser erweitert ist (vgl. Fig. 6, 7). Für eine Stufenbohrung ist es auch denkbar, dass der Grundkörper sich stufenförmig nach hinten erweitert, und dass im Bereich der Stufenkontur mindestens ein weiteres Schneidelement angeordnet ist (nicht gezeigt).

Gemäß Fig. 7 ist auch aus der Stellung der Schneidelemente 16, 18 und der Spanauslauföffnungen 34 erkennbar, dass die Spanabfuhrkanäle 24, von denen nur einer gestrichelt angedeutet ist, gewendelt verlaufen. Dabei ist die Innenwand 70 umlaufend komplex geformt, wie es auch aus Fig. 9 ersichtlich ist.

Wie in Fig. 10 illustriert, verlaufen die von dem zentralen Zuführkanal 50 abzweigenden Kühlmittelkanäle 44 spiralisiert um die Mittelachse 12 und in Bogenform zu jeweils einer einzelnen Auslassöffnung 72. Diese mündet nach hinten gerichtet in den jeweiligen Spanabfurkanal 24, wodurch der Spanfluss durch den Kühlmittelstrom begünstigt wird. In Fig. 7 ist auch angedeutet, dass die Schneidelemente 16, 18 unter einem Achswinkel, beispielsweise von 10°, bezüglich der Mittelachse schräg angestellt sind, um die Schneidwirkung zu verbessern.

## Patentansprüche

1. Zerspanungswerkzeug zum Einsatz in Werkzeugmaschinen für rotierende Schneidvorgänge, insbesondere Vollbohrwerkzeug, Aufbohrwerkzeug, Senkwerkzeug oder Reibwerkzeug, mit einem um eine Mittelachse (12) rotierbaren, in deren Richtung langgestreckten Grundkörper (14), mindestens einem an dem Grundkörper (14) fixierten Schneidelement (16,18) und mindestens einem längs des Grundkörpers (14) außerhalb der Mittelachse (12) sich erstreckenden, durch einen von der Mittelachse (12) durchsetzen Kern (38) des Grundkörpers (14) nach innen begrenzten Spanabfuhrkanal (24), wobei der Spanabfuhrkanal (24) zumindest über einen Längsabschnitt durch eine an den Kern (38) anschließende äußere Spanraumwand (22) nach außen abgeschlossen ist, **dadurch gekennzeichnet, dass** die äußere Spanraumwand (22) und zumindest ein Teil des Kerns (38) als einstückiges Bauteil aus einem Pulvermaterial durch ein additives Fertigungsverfahren gebildet sind, und dass durch den Kern (38) mindestens ein zumindest abschnittsweise räumlich gekrümmt verlaufender Kühlmittelkanal (44) hindurchgeführt ist.

2. Zerspanungswerkzeug nach Anspruch 1, **dadurch gekennzeichnet, dass** die äußere Spanraumwand (22) einen Teil eines um die Mittelachse (12) geschlossen umlaufenden Außenmantels (42) des Grundkörpers (14) bildet.

3. Zerspanungswerkzeug nach Anspruch 1 oder 2, **dadurch gekennzeichnet, dass** die äußere Spanraumwand (22) in Umfangsrichtung gesehen eine variierende Wandstärke aufweist.

4. Zerspanungswerkzeug nach einem der Ansprüche 1 bis 3, **dadurch gekennzeichnet, dass** der Spanabfuhrkanal (24) längs des Grundkörpers (14) gegebenenfalls mit veränderlicher Steigung gewendelt oder gedrallt verläuft.

5. Zerspanungswerkzeug nach einem der Ansprüche 1 bis 4, **dadurch gekennzeichnet, dass** der Spanabfuhrkanal (24) in seinem Verlauf eine veränderliche, vorzugsweise nach hinten sich erweiternde Querschnittsgröße besitzt.

6. Zerspanungswerkzeug nach einem der Ansprüche 1 bis 5, **dadurch gekennzeichnet, dass** in dem Grundkörper (14) mehrere Spanabfuhrkanäle (24) mit voneinander unterschiedlichem Verlauf, insbesondere mit voneinander unterschiedlicher Steigung angeordnet sind.

7. Zerspanungswerkzeug nach einem der Ansprüche 1 bis 6, **dadurch gekennzeichnet, dass** das Schneidelement (16,18) im Bereich einer nach außen offenen Spanleitkontur (32) eines zugeordneten Spanabfuhrkanals (24) angeordnet ist.

8. Zerspanungswerkzeug nach einem der Ansprüche 1 bis 7, **dadurch gekennzeichnet, dass** der Spanabfuhrkanal (24) einen von der äußeren Spanraumwand (22) freigehaltenen Spanauslauf (34) aufweist.

9. Zerspanungswerkzeug einem der Ansprüche 1 bis 8, **dadurch gekennzeichnet, dass** der Kühlmittelkanal (44) in einem Endabschnitt auf mehrere Auslassbohrungen (46,48) verzweigt ist.

10. Zerspanungswerkzeug nach einem der Ansprüche 1 bis 9, **dadurch gekennzeichnet, dass** das Schneidelement (16,18) durch Löten, Kleben, Klemmen, Schrauben oder Sintern direkt mit dem Grundkörper (14) verbunden ist oder mittelbar über eine Kassette an dem Grundkörper (14) gehalten ist.

11. Zerspanungswerkzeug nach einem der Ansprüche 1 bis 10, **dadurch gekennzeichnet, dass** der Grundkörper eine vorzugsweise in einer Radialebene liegende vordere Stirnwand aufweist, und dass die Stirnwand einen Querschnittsbereich des mindestens einen Spanabfuhrkanals überdeckt.

12. Zerspanungswerkzeug nach Anspruch 11, **dadurch gekennzeichnet, dass** die Stirnwand einen in den Spanabfuhrkanal mündenden Stirnspalt gegenüber dem Schneidelement begrenzt.

13. Zerspanungswerkzeug nach Anspruch 11 oder 12, **dadurch gekennzeichnet, dass** das Schneidelement eine radial nach außen weisende Radialschneide oder Rundschlifffase aufweist, und dass zwischen der äußeren Spanraumwand und dem Schneidelement ein Radialspalt freigehalten ist.

14. Zerspanungswerkzeug nach einem der Ansprüche 1 bis 13, **dadurch gekennzeichnet, dass** der mindestens eine Kühlmittelkanal in Bogenform zu einer in den Spanabfuhrkanal mündenden, in Spanabfuhrrichtung ausgerichteten Auslassöffnung geführt ist.

15. Zerspanungswerkzeug nach einem der Ansprüche 1 bis 14, **dadurch gekennzeichnet, dass** das Schneidelement unter einem Achswinkel schräg bezüglich der Mittelachse angestellt ist.

16. Zerspanungswerkzeug nach einem der Ansprüche 1 bis 15, **dadurch gekennzeichnet, dass** mindestens ein Schneidelement (16,18) eine bis zur Mittelachse radial nach innen reichende Stirnschneide aufweist.

17. Zerspanungswerkzeug nach einem der Ansprüche 1 bis 16, **dadurch gekennzeichnet, dass** der Grundkörper eine axiale Stufenkontur mit unterschiedlichen Durchmessern aufweist, und dass im Bereich der Stufenkontur mindestens ein Schneidelement angeordnet ist.

## Claims

1. Machining tool for use in machine tools for rotating cutting operations, in particular a solid drilling tool, re-boring tool, counterboring tool or reaming tool, comprising a main body (14), which can be rotated about a center axis (12) and is elongate in the direction of the center axis (12), at least one cutting element (16, 18) fastened to the main body (14) and at least one chip removal channel (24), which extends along the main body (14) outside of the center axis (12) and is bounded inwardly by a core (38) of the main body (14), through which core the center axis (12) passes, the chip removal channel (24) being outwardly closed at least over a longitudinal section by an outer chip space wall (22) adjoining the core (38), **characterized in that** the outer chip space wall (22) and at least a part of the core (38) are formed, as an integral component, by a powder material by means of an additive manufacturing process and **in that** at least one coolant channel (44), which extends so as to be spatially curved at least in sections, passes through the core (38).

2. Machining tool according to claim 1, **characterized in that** the outer chip space wall (22) forms part of an outer surface (42) of the main body (14) which surrounds the center axis (12) so as to be closed.

3. Machining tool according to claim 1 or 2, **characterized in that** the outer chip space wall (22) has a varying wall thickness, viewed in the circumferential direction.

4. Machining tool according to any of claims 1 to 3, **characterized in that** the chip removal channel (24) extends along the main body (14), optionally with variable pitch, so as to be coiled or twisted.

5. Machining tool according to any of claims 1 to 4, **characterized in that** the course of the chip removal channel (24) has a cross-sectional size that is variable and preferably expands towards the rear.

6. Machining tool according to any of claims 1 to 5, **characterized in that** a plurality of chip removal channels (24) are arranged in the main body (14) so as to have different courses, in particular different pitches.

7. Machining tool according to any of claims 1 to 6, **characterized in that** the cutting element (16, 18) is arranged in the region of an outwardly open chip conducting contour (32) of an associated chip removal channel (24).

8. Machining tool according to any of claims 1 to 7, **characterized in that** the chip removal channel (24) comprises a chip outlet (34) which is kept clear of the outer chip space wall (22).

9. Machining tool according to any of claims 1 to 8, **characterized in that** the coolant channel (44) is branched in an end portion to a plurality of outlet holes (46, 48).

10. Machining tool according to any of claims 1 to 9, **characterized in that** the cutting element (16, 18) is directly connected to the main body (14) by soldering, gluing, clamping, screwing or sintering or is indirectly held on the main body (14) by means of a cartridge.

11. Machining tool according to any of claims 1 to 10, **characterized in that** the main body has a front end-wall, preferably in a radial plane, and **in that** the end wall covers a cross-sectional region of the at least one chip removal channel.

12. Machining tool according to claim 11, **characterized in that** the end wall delimits an end gap, which opens into the chip removal channel, with respect to the cutting element.

13. Machining tool according to claim 11 or 12, **characterized in that** the cutting element has a radially outwardly pointing radial cutting edge or cylindrical grinding bevel, and **in that** a radial gap is kept clear between the outer chip space wall and the cutting element.

14. Machining tool according to any of claims 1 to 13, **characterized in that** the at least one coolant channel extends, in an arcuate manner, to an outlet opening that opens into the chip removal channel and is oriented in the chip removal direction.

15. Machining tool according to any of claims 1 to14, **characterized in that** the cutting element is obliquely inclined at a shaft angle with respect to the center axis.

16. Machining tool according to any of claims 1 to 15, **characterized in that** at least one cutting element (16, 18) has an end cutting-edge that extends radially inwardly as far as the center axis.

17. Machining tool according to any of claims 1 to 16, **characterized in that** the main body has an axial stepped contour having various diameters, and **in that** at least one cutting element is arranged in the region of the stepped contour.

## Revendications

1. Outil d'usinage par enlèvement de copeaux destiné à être utilisé dans les machines-outils pour les processus rotatifs de coupe, en particulier outil de perçage plein, outil de forage, outil de fraisage ou outil d'alésage, avec un corps de base (14) pouvant tourner autour d'un axe central (12) et allongé dans sa direction, au moins un élément de coupe (16, 18) fixé sur le corps de base (14) et au moins un canal d'évacuation de copeaux (24) s'étendant le long du corps de base (14) à l'extérieur de l'axe central (12) et délimité vers l'intérieur par un noyau (38) du corps de base (14) traversé par l'axe central (12), le canal d'évacuation de copeaux (24) étant terminé vers l'extérieur au moins sur une section longitudinale par une paroi extérieure (22) de compartiment d'enlèvement de copeaux attenante au noyau (38), **caractérisé en ce que** la paroi extérieure (22) de compartiment d'enlèvement de copeaux et au moins une partie du noyau (38) sont formées comme un composant monobloc à partir d'un matériau en poudre au moyen d'un procédé de fabrication additive, et qu'au moins un canal de liquide de refroidissement (44) évoluant de manière incurvée dans l'espace au moins par sections est traversé par le noyau (38).

2. Outil d'usinage par enlèvement de copeaux selon la revendication 1, **caractérisé en ce que** la paroi extérieure (22) de compartiment d'enlèvement de copeaux forme une coque extérieure (42) du corps de base (14) tournant autour de l'axe central (12) de manière fermée.

3. Outil d'usinage par enlèvement de copeaux selon la revendication 1 ou 2, **caractérisé en ce que** la paroi extérieure (22) de compartiment d'enlèvement de copeaux présente une épaisseur de paroi variable vue dans la direction circonférentielle.

4. Outil d'usinage par enlèvement de copeaux selon l'une des revendications 1 à 3, **caractérisé en ce que** le canal d'évacuation de copeaux (24) évolue le long du corps de base (14) par enroulement ou torsion avec un pas variable.

5. Outil d'usinage par enlèvement de copeaux selon l'une des revendications 1 à 4, **caractérisé en ce que** le canal d'évacuation de copeaux (24) possède une taille de section transversale variable, de préférence s'élargissant vers l'arrière, dans son parcours.

6. Outil d'usinage par enlèvement de copeaux selon l'une des revendications 1 à 5, **caractérisé en ce que** plusieurs canaux d'évacuation de copeaux (24) sont disposés dans le corps de base (14) selon un parcours différent les uns des autres, en particulier selon une inclinaison différente les uns des autres.

7. Outil d'usinage par enlèvement de copeaux selon l'une des revendications 1 à 6, **caractérisé en ce que** l'élément de coupe (16, 18) est disposé dans la région d'un contour de guidage de copeaux (32) ouvert vers l'extérieur d'un canal d'évacuation de copeaux associé (24).

8. Outil d'usinage par enlèvement de copeaux selon l'une des revendications 1 à 7, **caractérisé en ce que** le canal d'évacuation de copeaux (24) présente une sortie de copeaux (34) maintenue à l'écart de la paroi extérieure (22) de compartiment d'enlèvement de copeaux.

9. Outil d'usinage par enlèvement de copeaux selon l'une des revendications 1 à 8, **caractérisé en ce que** le canal de liquide de refroidissement (44) est ramifié en une pluralité d'alésages de sortie (46, 48) dans une section d'extrémité.

10. Outil d'usinage par enlèvement de copeaux selon l'une des revendications 1 à 9, **caractérisé en ce que** l'élément de coupe (16, 18) est relié directement au corps de base (14) par brasage, collage, serrage, vissage ou frittage ou maintenu indirectement par une cassette sur le corps de base (14).

11. Outil d'usinage par enlèvement de copeaux selon l'une des revendications 1 à 10, **caractérisé en ce que** le corps de base présente une paroi d'extrémité avant, de préférence située dans un plan radial, et **en ce que** la paroi d'extrémité recouvre une section transversale de l'au moins un canal d'évacuation de copeaux.

12. Outil d'usinage par enlèvement de copeaux selon la revendication 11, **caractérisé en ce que** la paroi d'extrémité délimite un intervalle d'extrémité débouchant dans le canal d'évacuation de copeaux par rapport à l'élément de coupe.

13. Outil d'usinage par enlèvement de copeaux selon la revendication 11 ou 12, **caractérisé en ce que** l'élément de coupe présente un bord de coupe radial ou un biseau circulaire orienté radialement vers l'extérieur, et **en ce qu'**un espace radial est maintenu à l'écart entre la paroi extérieure de compartiment d'enlèvement de copeaux et l'élément de coupe.

14. Outil d'usinage par enlèvement de copeaux selon l'une des revendications 1 à 13, **caractérisé en ce que** l'au moins un canal de réfrigérant est guidé en forme d'arc vers une ouverture de sortie débouchant dans le canal d'évacuation de copeaux et orienté dans le sens d'évacuation des copeaux.

15. Outil d'usinage par enlèvement de copeaux selon l'une des revendications 1 à 14, **caractérisé en ce que** l'élément de coupe est incliné à raison d'un angle d'axe par rapport à l'axe central.

16. Outil d'usinage par enlèvement de copeaux selon l'une des revendications 1 à 15, **caractérisé en ce qu'au** moins un élément de coupe (16, 18) présente un bord de coupe d'extrémité s'étendant radialement vers l'intérieur jusqu'à l'axe central.

17. Outil d'usinage par enlèvement de copeaux selon l'une des revendications 1 à 16, **caractérisé en ce que** le corps de base présente un contour de marche axial avec des diamètres différents, et **en ce qu'**au moins un élément de coupe est disposé dans la région du contour de marche.
